Europäisches Patentamt

(19) European Patent Office

Office européen des brevets

(11) Veröffentlichungsnummer: **0 011 798**
**B1**

(12) **EUROPÄISCHE PATENTSCHRIFT**

(45) Veröffentlichungstag der Patentschrift:
22.12.82

(51) Int. Cl.³: **C 02 F 1/44, B 01 D 13/00**

(21) Anmeldenummer: 79104573.5

(22) Anmeldetag: 19.11.79

(54) Vorrichtung zur Gewinnung von Trinkflüssigkeit aus Meerwasser, verunreinigtem Wasser o. dgl. durch Osmose.

(30) Priorität: 25.11.78 DE 2851105
19.06.79 DE 7917456 U

(43) Veröffentlichungstag der Anmeldung:
11.06.80 Patentblatt 80/12

(45) Bekanntmachung des Hinweises auf die Patenterteilung:
22.12.82 Patentblatt 82/51

(84) Benannte Vertragsstaaten:
AT BE CH DE FR GB IT NL SE

(56) Entgegenhaltungen:
GB-A-1 224 528
US-A-3 696 931

(73) Patentinhaber: Stache, Knut, Bleichstrasse 44,
D-6100 Darmstadt (DE)

(72) Erfinder: Stache, Knut, Bleichstrasse 44,
D-6100 Darmstadt (DE)

(74) Vertreter: Katscher, Helmut, Dipl.-Ing.,
Bismarckstrasse 20, D-6100 Darmstadt (DE)

# Vorrichtung zur Gewinnung von Trinkflüssigkeit aus Meerwasser, verunreinigtem Wasser od. dgl. durch Osmose

Die Erfindung betrifft eine Vorrichtung zur Gewinnung von Trinkflüssigkeit aus Meerwasser, verunreinigtem Wasser od.dgl. durch Osmose mittels einer semipermeablen Membran, wobei die Aussenwand des Behälters mindestens teilweise als semipermeable Membran ausgeführt ist und der Behälter einen Aufnahmeraum für einen wasserlöslichen geniessbaren Stoff aufweist.

Eine Vorrichtung der eingangs genannten Art ist aus der US-A-3 696 931 bekannt. Die bekannte Vorrichtung weist ein starres, geschlossenes Gefäss auf, das ausser dem wasserlöslichen geniessbaren Stoff auch Luft enthält. Diese Vorrichtung ist aus mehreren Gründen nicht zur Gewinnung von Trinkflüssigkeit aus Meerwasser in Seenotfällen und ähnlichen Situationen geeignet.

Die bekannten Vorrichtungen sind nicht dazu geeignet, in ein offenes und bewegtes Gewässer gehängt zu werden. Nur die ständige Wasserbewegung ermöglicht es aber, den osmotischen Prozess in Gang zu halten. Fehlt eine solche Wasserbewegung, so erhöht sich infolge des Osmosevorgangs die Salzkonzentration an der Aussenseite der Membran so schnell, dass der osmotische Prozess schon nach wenigen Minuten zum Erliegen kommt, da dann keine Konzentrationsdifferenz zwischen der Innen- und Aussenseite mehr besteht. Bei Bewegung des Wassers wird die höhere Salzkonzentration laufend abgewaschen, so dass der osmotische Prozess ungestört ablaufen kann.

Wenn die Vorrichtung aus den genannten Gründen in das bewegte Wasser hineingehängt wird, muss der Behälter allseitig geschlossen sein, um zu verhindern, dass Wasser von oben in den geöffneten Behälter gelangt. Notwendigerweise ist der Behälter dann aber auch völlig luftdicht. Wenn ein solcher Behälter Luft enthält, wie dies bei der bekannten Vorrichtung der Fall ist, dann wird die Luft komprimiert, wenn Wasser infolge des osmotischen Prozesses in den Behälter eindringt. Bei weiterer Druckerhöhung platzt entweder der Behälter, oder der osmotische Prozess wird durch den hohen Innendruck behindert. Daher sind die starren, geschlossenen, Luft enthaltenden Behälter nach dem Stand der Technik für die vorgesehenen Verwendungsbereiche nicht geeignet.

Aufgabe der Erfindung ist es daher, eine kompakte, billige, einfache und robuste Vorrichtung der eingangs genannten Art zu schaffen, mit der in einfacher und zuverlässiger Weise Trinkflüssigkeit aus Meerwasser, verunreinigtem Wasser od.dgl. unter den in Seenotfällen oder ähnlichen Situationen herrschenden Bedingungen erzeugt werden kann.

Diese Aufgabe wird erfindungsgemäss dadurch gelöst, dass der Behälter ein allseitig geschlossener Folienbeutel ist, der mindestens teilweise aus semipermeabler Membran besteht.

Im Gegensatz zu einem starren, geschlossenen, Luft enthaltenden Behälter ist der Folienbeutel geeignet, beispielsweise in bewegtes Meerwasser gehängt zu werden. Bei der durch die Osmose bedingten Vergrösserung des Innenvolumens tritt keine Druckerhöhung ein, so dass der Behälter nicht platzt und der osmotische Prozess nicht gestört wird.

Bei dieser Vorrichtung wird die normale Osmose unmittelbar zur Gewinnung der Trinkflüssigkeit verwendet, indem reines Wasser aus dem Meerwasser od. dgl. durch die semipermeable Membran zu dem wasserlöslichen geniessbaren Stoff diffundiert. Die konzentrierte Lösung, d.h. der wasserlösliche geniessbare Stoff im Inneren des Folienbeutels entzieht nach dem normalen Osmosevorgang einer weniger konzentrierten Lösung, nämlich dem Meerwasser od. dgl., das Lösungsmittel, nämlich Wasser. Die ursprünglich konzentrierte Lösung wird also durch die Zuführung von reinem Wasser verdünnt, so dass eine Trinkflüssigkeit entsteht, die zwar kein reines Wasser ist, die aber als gelösten, für die Durchführung der Osmose notwendigen Stoff kein Salz, sondern einen geniessbaren Stoff enthält, der den physiologischen Wert dieser Trinkflüssigkeit gegenüber reinem Wasser noch wesentlich erhöht.

Semipermeable Membranen werden in unterschiedlichen Ausführungsformen als synthetische Folie hergestellt und hauptsächlich in der Lebensmittel- und Pharmaindustrie angewendet. Da die erfindungsgemässe Vorrichtung so leicht, billig und platzsparend ist, dass sie für den einmaligen Gebrauch vorgesehen werden kann, bereitet es keine Schwierigkeiten, dass die verfügbare Membran für eine mehrfache Verwendung nicht zuverlässig genug ist. Für die einmalige Benutzung ist die Membran sehr zuverlässig.

Die erfindungsgemässe Vorrichtung entsalzt, entkeimt und filtert gleichzeitig und ist deshalb zur Aufbereitung nahezu jeder wasserhaltigen Flüssigkeit geeignet. Der Folienbeutel dient zugleich als Aufbewahrungsbehälter für das Getränk, so dass in der Überlebensausrüstung keine gesonderten Behälter hierfür vorgesehen werden müssen. Verpackt sind die Folienbeutel fast unbegrenzt lange haltbar und sehr robust. Die Handhabung ist auch für technisch Unbegabte völlig problemlos. Es handelt sich um kleine, voneinander unabhängige Einheiten, so dass auch bei Verlust oder Beschädigung mehrerer Folienbeutel die verbleibenden Folienbeutel voll einsatzfähig bleiben.

Die Folienbeutel arbeiten unabhängig von Sonnenstrahlung, Wassertemperatur, Muskelkraft oder sonstigen Energiequellen. Von besonderem Vorteil ist das sehr geringe Gewicht. Den weitaus grössten Teil des Gewichts der Vorrichtung macht der wasserlösliche geniessbare Stoff aus, so dass nahezu das gesamte Gewicht dem Benutzer als hochwertiges Nahrungsmittel zur Verfügung steht. Die erzeugte Trinkflüssigkeit ist deshalb ein Notgetränk und Notproviant gleichzeitig. Das geringe Gewicht ist besonders bei der Ausrüstung von Flugzeugen von beträchtlichem Vorteil. Beispielsweise kann ein Folienbeutel von 75 g Gewicht ca. 0,5 l schmackhafte Trinkflüssigkeit mit ca. 260 Kalorien Nährwert liefern.

Vorteilhafte Ausgestaltungen des Erfindungsgedankens sind Gegenstand von Unteransprüchen.

Die Erfindung wird nachfolgend an Ausführungsbeispielen näher erläutert, die in der Zeichnung dargestellt sind. Es zeigt:

Fig. 1 einen erfindungsgemässen Folienbeutel in Seitenansicht,

Fig. 2 den unteren Teil eines Folienbeutels nach einer abgewandelten Ausführungsform und

Fig. 3 eine weitere Ausführungsform eines erfindungsgemässen Folienbeutels im zusammengefalteten Zustand in einer Hülle.

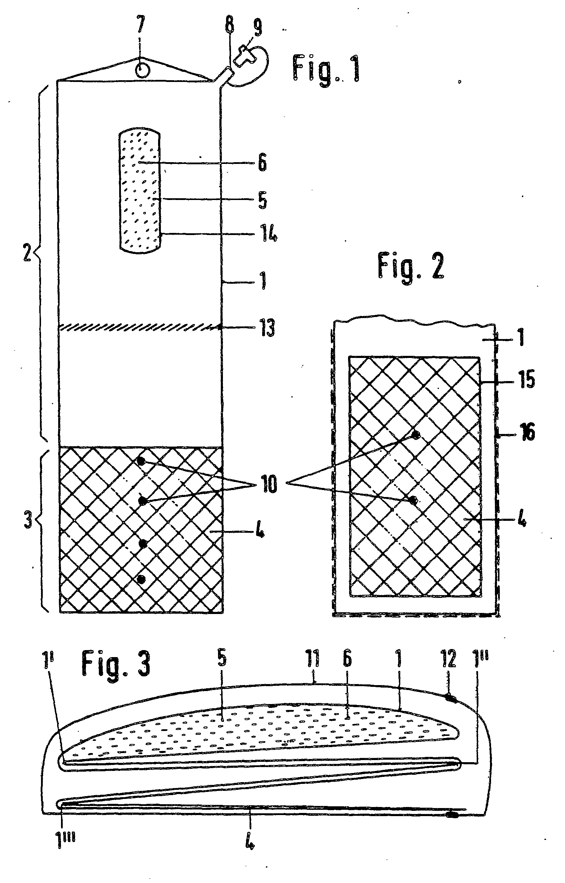

Der in Fig. 1 gezeigte Folienbeutel 1 besteht in seinem oberen Teil 2 aus einer wasserdichten Kunststofffolie. Der untere Teil 3 des schlauchförmigen Folienbeutels 1 besteht aus einer Folie, die eine semipermeable Membran 4 bildet. Im oberen Teil 2 des Folienbeutels 1 ist eine zerdrückbare, geschlossene Kapsel 14 angeordnet, die einen Aufnahmeraum 5 für einen wasserlöslichen geniessbaren Stoff 6 bildet, beispielsweise Fruchtzucker mit einem durststillenden und erfrischenden Geschmackszusatz.

Der allseitig geschlossene Folienbeutel 1 weist an seinem oberen Ende eine Aufhängeöse 7 und eine Entnahmeöffnung 8 auf, die mittels eines Stopfens 9 verschlossen ist. An mehreren Schweiss- oder Klebepunkten 10 sind die benachbarten Membranwände des unteren Beutelteils 3 miteinander verbunden.

Zur Gewinnung von Trinkflüssigkeit wird die Kapsel 14 durch die Wand des Folienbeutels 1 hindurch zerdrückt, ohne dass der Folienbeutel dabei beschädigt wird; dann wird der Folienbeutel 1 in Meerwasser, Brackwasser, Urin, verschmutztes oder unbekanntes Süsswasser od. dgl. gehängt und füllt sich dann langsam mit Wasser. Im Folienbeutel entsteht ein salzarmes und keimfreies Getränk. Nach dem Genuss dieses Getränks kann der Folienbeutel 1 weggeworfen werden.

Als wasserlöslicher geniessbarer Stoff 6 eignen sich viele Stoffe, sofern sie die folgenden Anforderungen erfüllen: möglichst kleines Molekulargewicht, physiologische Verträglichkeit, hoher Nährwert, akzeptabler Geschmack, lange Lagerfähigkeit, Preiswürdigkeit und die Eigenschaft, keinen Durst zu erzeugen. Sehr günstig ist beispielsweise die Verwendung von Fruchtzucker, dem als erfrischender und durststillender Geschmackszusatz Fruchtsäuren oder Menthol zugesetzt ist. Wenn gleichzeitig ein Sättigungseffekt gewünscht wird, so kann durch den Zusatz eines Quellstoffes ein puddingartiger Brei erzeugt werden. Ausserdem können Wirkstoffe wie Vitamine, Coffein oder pharmazeutische Mittel zugesetzt werden.

Je nach der Art der verwendeten Membran 4 kann es günstiger sein, den Fruchtzucker trocken und pulverisiert oder feucht und sirupartig einzusetzen.

Durch die Verwendung von einfacher Kunststofffolie für den oberen Beutelteil 2 werden die Herstellungskosten verringert, weil die Kunststofffolie wesentlich billiger als die semipermeable Membran 4 ist.

Durch die Verbindung der Membranwände im unteren Teil 3 durch die Schweiss- oder Klebepunkte 10 wird erreicht, dass der Raum in diesem unteren Beutelteil 3 verkleinert wird, so dass der wasserlösliche geniessbare Stoff 6 dort mit einer verhältnismässig grossen Membranfläche in Berührung kommt. Dadurch wird erreicht, dass der Osmosevorgang schneller beginnt.

Die Unterbringung des wasserlöslichen geniessbaren Stoffs 6 in der geschlossenen Kapsel 14 verhindert bei der Lagerung die vorzeitige Berührung des Stoffs 6 mit der Membran 4, so dass auch bei längerer Lagerung keine nachteiligen Einflüsse auf die Wirksamkeit der Membran ausgeübt werden können. Die zerdrückbare geschlossene Kapsel 5 kann ohne Beschädigung des Folienbeutels 1 geöffnet werden, wenn der Folienbeutel in Benutzung genommen wird. Der Stoff 6 gelangt dann in den unteren Beutelteil 3, so dass die Osmose beginnen kann.

Eine andere Möglichkeit, die vorzeitige Berührung des Stoffes 6 mit der Membran 4 zu verhindern, besteht darin, den Stoff 6, wie in Fig. 3 gezeigt, im oberen Teil des Folienbeutels 1 den Aufnahmeraum 5 vorzusehen und den Stoff 6 dort lose aufzubewahren und den Folienbeutel 1 mehrfach zusammenzufalten. Die dabei entstehenden Falten 1', 1'', 1''' verhindern eine Berührung des Stoffs 6 mit der Membran 4. Vor dem Gebrauch wird der Folienbeutel 1 nach dem Auseinanderfalten kurz geschüttelt, so dass sich der Stoff 6 im unteren Beutelteil 3 sammelt.

Da die Folienbeutel oft jahrelang unter unvorhersehbaren Umweltbedingungen gelagert werden müssen, ist es zweckmässig, sie im zusammengefalteten Zustand dampfdicht zu verpacken, z.B. durch Einschweissen in eine Hülle 11 (Fig. 2) aus Kunststofffolie, die an einem umlaufenden, eingelassenen Aufreissstreifen 12 geöffnet werden kann.

Das Volumen des Folienbeutels 1 kann so ausgelegt werden, dass es genau zur Aufnahme derjenigen Wassermenge ausreicht, die zum Ausgleich der Konzentration aus normalem Meerwasser mit etwa 3,5% Salzgehalt bei der Osmose zum Stoff 6 übertritt. Die vollständige Füllung des Folienbeutels 1 zeigt dann an, dass der Vorgang der Gewinnung von Trinkflüssigkeit beendet werden soll.

Wird ein Folienbeutel 1 zur Gewinnung von Trinkflüssigkeit aus Wasser mit geringerer Salzkonzentration benutzt, beispielsweise Brackwasser, verschmutztem Flusswasser, Urin usw., so ist die Gewinnung einer grösseren Flüssigkeitsmenge möglich. Damit dieser Vorteil ausgenutzt werden kann, ist es nötig, das Beutelvolumen entsprechend grösser zu wählen und eine Markierung, z.B. einen umlaufenden Farbstrich 13, am Folienbeutel 1 anzubringen, die die höchstzulässige Füllmenge bei der Anwendung in normalem Meerwasser anzeigt, die jedoch bei der Anwendung in Wasser mit geringerer Salzkonzentration entsprechend überschritten werden kann.

Die Rückhaltefähigkeit der semipermeablen Membran 4 ist jeweils entsprechend dem vorgesehenen Einsatz zu wählen bzw. bei universell verwendbaren Folienbeuteln so hoch zu wählen, dass bei der höchsten auftretenden Salzkonzentration ein durchschnittlicher Salzgehalt von höchstens 0,5% in der Trinkflüssigkeit nicht überschritten wird.

Semipermeable Membranen, die z.B. aus Celluloseacetat bestehen, sind häufig auf eine Stützschicht, beispielsweise aus Papier, aufgebracht. Diese Stützschicht wird zweckmässigerweise nach aussen, d.h. auf die dem Meerwasser zugewandte Seite des Folienbeutels 1 gelegt. Die Stützschicht dient dann als Vorfilter und als Schutz für die Membran vor mechanischen Beschädigungen. Es kann auch eine zusätzliche Filterschicht, z.B. aus Fliesspapier, aussen aufgebracht werden. Bei nur einmal zu verwendenden Folienbeuteln ist dies jedoch wegen der nur einmaligen kurzen Benutzung nicht unbedingt notwendig.

Wie in Fig. 1 gezeigt, kann die Entnahmeöffnung 8 als Mundstück ausgeführt sein, das mit dem Stopfen 9 verschlossen werden kann. Statt dessen kann der Folienbeutel 1 auch mit einem ohne Werkzeug zu öffnenden Verschluss, z.B. mit in die Kunststoffolie eingelassenen Aufreissstreifen versehen sein.

Fig. 2 zeigt in einer Ansicht des unteren Teils des Folienbeutels 1 eine gegenüber der Fig. 1 abgewandelte Ausführungsform, bei der die semipermeable Membran 4 in ein Fenster 15 des Folienbeutels 1 eingesetzt ist, beispielsweise eingeschweisst. In gleicher Weise kann in der Rückwand des Folienbeutels 1 ein solches Fenster 15 mit einer semipermeablen Membran 4 vorgesehen sein. Dadurch wird eine grössere Stabilität des unteren Beutelteils erreicht, da die Festigkeit der semipermeablen Membran im allgemeinen geringer als die der für den übrigen Beutelteil verwendeten Kunststoffolie ist.

Die Festigkeit des Folienbeutels kann auch noch dadurch erhöht werden, dass die erwähnte zusätzliche äussere Filterschicht oder Stützschicht aus einem festen Material besteht (z.B. reissfestem Kunstfasergewebe) und nicht nur die Aussenseite der semipermeablen Membran bedeckt, sondern über diese hinausgehend auch die Schweiss- bzw. Klebenähte zur angrenzenden Folie überdeckt und somit ein Ausreissen dieser Nähte verhindert oder zumindest erschwert.

Eine besonders wirksame Erhöhung der Festigkeit des Folienbeutels kann erreicht werden, wenn mindestens der untere, die semipermeable Membran und die daran angrenzenden Nähte aufweisende Teil des Folienbeutels von einem zusätzlichen, äusseren Beutel 16, der einen Überbeutel bildet, dicht umschlossen ist, der beispielsweise aus Kunstfasergewebe bestehen kann (Fig. 2).

Der Erfindungsgedanke ist nicht auf die beschriebenen Beutelformen, Materialien und Anwendungsgebiete beschränkt. Es sind noch viele andere Beutelformen und Beutelfaltungsarten möglich. Der Folienbeutel 1 und/oder die Hülle 11 können auch aus anderen Materialien als Kunststoffolie sein, z.B. aus einer Metall-Kunststoff-Verbundfolie, aus Gummi od.dgl. Ebenfalls sind zahlreiche andere Anwendungsbereiche möglich, z.B. die Gewinnung von Trinkflüssigkeit aus Oberflächenwasser, das durch Kampfstoffe verseucht ist.

Als bevorzugte Anwendungsart wurde die einmalige Verwendung beschrieben, d.h. der Folienbeutel wird weggeworfen, nachdem er ein einziges Mal benutzt worden ist. Grundsätzlich besteht im Rahmen der Erfindung aber auch die Möglichkeit, die Folienbeutel mehrmals zu benutzen. Zu diesem Zweck können beispielsweise mehrere Kapseln 5, die den lösbaren Stoff 6 enthalten, verwendet werden, wobei für jeden einzelnen Benutzungsvorgang jeweils nur eine Kapsel zerdrückt wird. Statt dessen ist es auch möglich, den wasserlöslichen geniessbaren Stoff 6 nach jeder Benutzung des Folienbeutels 1 nachzufüllen. Bei der Mehrfachbenutzung sollte dem wasserlöslichen geniessbaren Stoff 6 zweckmässigerweise ein für den menschlichen Genuss unschädliches Entkeimungsmittel oder Konservierungsmittel beigemischt werden.

## Patentansprüche

1. Vorrichtung zur Gewinnung von Trinkflüssigkeit aus Meerwasser, verunreinigtem Wasser od.dgl. durch Osmose mittels einer semipermeablen Membran, wobei die Aussenwand des Behälters mindestens teilweise als semipermeable Membran (4) ausgeführt ist und der Behälter einen Aufnahmeraum (5) für einen wasserlöslichen geniessbaren Stoff (6) aufweist, dadurch gekennzeichnet, dass der Behälter ein allseitig geschlossener Folienbeutel (1) ist, der mindestens teilweise aus semipermeabler Membran (4) besteht.

2. Vorrichtung nach Patentanspruch 1, dadurch gekennzeichnet, dass der Folienbeutel (1) einen wasserlöslichen geniessbaren Stoff (6), vorzugsweise ein Nahrungsmittel, enthält.

3. Vorrichtung nach Patentanspruch 2, dadurch gekennzeichnet, dass der wasserlösliche geniessbare Stoff derart getrennt von der semipermeablen Membran (4) mit Folienbeutel (1) untergebracht ist, dass ein Kontakt dieses Stoffes (6) mit der semipermeablen Membran (4) erst bei Benutzung der Vorrichtung möglich ist.

4. Vorrichtung nach Patentanspruch 2, dadurch gekennzeichnet, dass der Aufnahmeraum (5) für den wasserlöslichen geniessbaren Stoff durch mindestens eine zerdrückbare geschlossene Kapsel (14) im Inneren des Folienbeutels (1) gebildet wird.

5. Vorrichtung nach Patentanspruch 1, dadurch gekennzeichnet, dass der Folienbeutel (1) länglich ausgeführt ist und nur in seinem unteren Teil (3) aus mindestens einer semipermeablen Membran (4) besteht, und dass der Aufnahmeraum (5) für den wasserlöslichen geniessbaren Stoff (6) im oberen Teil (2) des Folienbeutels (1) liegt.

6. Vorrichtung nach Patentanspruch 1, dadurch gekennzeichnet, dass der Folienbeutel (1) zusammengefaltet in einer verschlossenen, aufreissbaren Hülle (11) angeordnet ist.

7. Vorrichtung nach Patentanspruch 1, dadurch gekennzeichnet, dass der untere, mindestens eine semipermeable Membran (4) aufweisende Teil (3) des Folienbeutels (1) an mindestens einer Stelle eine Verbindung (10) zwischen benachbarten Wänden aufweist, vorzugsweise eine Verschweissung oder Verklebung.

8. Vorrichtung nach Patentanspruch 1, dadurch gekennzeichnet, dass der Folienbeutel (1) eine wiederverschliessbare Entnahmeöffnung (8) aufweist, die geeignet ist, als Mundstück zu dienen.

9. Vorrichtung nach Patentanspruch 1, dadurch gekennzeichnet, dass auf der Aussenseite der semipermeablen Membran (4) eine zusätzliche Filterschicht aufgebracht ist.

10. Vorrichtung nach Patentanspruch 9, dadurch gekennzeichnet, dass die Filterschicht über die semipermeable Membran (4) hinausgehend auch die Schweiss- bzw. Klebenähte zur angrenzenden Folie überdeckt.

11. Vorrichtung nach Patentanspruch 1, dadurch gekennzeichnet, dass mindestens der untere Teil des Folienbeutels (1) von einem permeablen, vorzugsweise aus Kunstfasergewebe bestehenden zusätzlichen Beutel (16) dicht umschlossen ist.

12. Vorrichtung nach Patentanspruch 1, dadurch gekennzeichnet, dass der Folienbeutel (1) mindestens eine ösenartige Aufhängevorrichtung (7) aufweist.

13. Vorrichtung nach Patentanspruch 1, dadurch gekennzeichnet, dass der Folienbeutel (1) mindestens eine Füllmengenmarkierung (13) aufweist.

14. Vorrichtung nach Patentanspruch 1, dadurch gekennzeichnet, dass der wasserlösliche geniessbare Stoff Fructose enthält.

15. Vorrichtung nach Patentanspruch 1, dadurch gekennzeichnet, dass der wasserlösliche geniessbare Stoff Fruchtsäuren enthält.

16. Vorrichtung nach Patentanspruch 1, dadurch gekennzeichnet, dass der wasserlösliche geniessbare Stoff mit Vitaminen und/oder anderen pharmazeutischen Wirkstoffen angereichert ist.

## Claims

1. Contrivance for producing potable liquid from sea-water, polluted water or the like by osmosis by means of a semipermeable membrane, wherein the outer wall of the container is formed at least partly as a semipermeable membrane (4) and the container has an accommodating space (5) for a water-soluble edible or drinkable substance (6), characterised in that the container is a film bag (1) closed on all sides, which consists at least partly of semipermeable membrane (4).

2. Contrivance according to Claim 1, characterised in that the film bag (1) contains a water-soluble edible or drinkable substance (6), preferably a foodstuff.

3. Contrivance according to Claim 2, characterised in that the water-soluble edible substance is accommodated in the film bag (1) separated in such a way from the semipermeable membrane (4) that any contact of this substance (6) with the semipermeable membrane (4) is possible only upon using the contrivance.

4. Contrivance according to Claim 2, characterised in that the accommodating space (5) for the water-soluble edible substance is formed by at least one crushable closed capsule (14) inside the film bag (1).

5. Contrivance according to Claim 1, characterised in that the film bag (1) is made oblong and only in its lower part (3) consists of at least one semipermeable membrane (4), and in that the receiving chamber (5) for the water-soluble edible substance (6) is situated in the upper part (2) of the film bag (1).

6. Contrivance according to Claim 1, characterised in that the film bag (1) is arranged folded up in a tear-open, sealed wrapping (11).

7. Contrivance according to Claim 1, characterised in that the lower part (3) of the film bag (1) having at least one semipermeable membrane (4) has at least one place a connection (10) between adjacent walls, preferably a welding or bonding.

8. Contrivance according to Claim 1, characterised in that the film bag (1) has a reclosable outlet opening (8) which is suitable for use as a mouthpiece.

9. Contrivance according to Claim 1, characterised in that an additional filter layer is applied on the outside of the semipermeable membrane (4).

10. Contrivance according to Claim 9, characterised in that the filter layer passing beyond the semipermeable membrane (4) also overlaps the welded or glued seams to the adjoining film.

11. Contrivance according to Claim 1, characterised in that at least the lower part of the film bag (1) is closely surrounded by a permeable additional bag (16) preferably consisting of plastics fibre fabric.

12. Contrivance according to Claim 1, characterised in that the film bag (1) has at least one eye-type hanging device (7).

13. Contrivance according to Claim 1, characterised in that the film bag (1) has at least one filling-level marking (13).

14. Contrivance according to Claim 1, characterised in that the water-soluble edible or drinkable substance contains fructose.

15. Contrivance according to Claim 1, characterised in that the water-soluble edible or drinkable substance contains fruit acids.

16. Contrivance according to Claim 1, characterised in that the water-soluble edible or drinkable substance is enriched with vitamins and/or other pharmaceutical additives.

## Revendications

1. Dispositif pour la production par osmose d'un liquide potable à partir d'eau de mer, d'eau pol-

luée, etc. au moyen d'une membrane semi-perméable, la paroi extérieure du récipient consistant au moins partiellement en une membrane semi-perméable (4) et le récipient présentant une chambre de chargement (5) pour une substance comestible soluble dans l'eau, caractérisé en ce que le récipient consiste en une poche en feuille (1) fermée de tous côtés qui est constituée au moins partiellement par une membrane semi-perméable (4).

2. Dispositif suivant revendication 1, caractérisé en ce que la poche en feuille (1) contient une substance (6) comestible soluble dans l'eau, de préférence un produit alimentaire.

3. Dispositif suivant revendication 2, caractérisé en ce que la substance comestible soluble dans l'eau est disposée de manière séparée de la membrane semi-perméable (4) dans la poche en feuille (1) de sorte qu'un contact de cette substance (6) avec la membrane semi-perméable (4) n'est possible que lors de l'utilisation du dispositif.

4. Dispositif suivant revendication 2, caractérisé en ce que la chambre de chargement (5) pour la substance comestible soluble dans l'eau est formée par au moins une capsule (14) fermée pouvant être écrasée disposée à l'intérieur de la poche en feuille (1).

5. Dispositif suivant la revendication 1, caractérisé en ce que la poche en feuille (1) est allongée, en ce qu'elle ne consiste qu'en sa partie inférieure (3) en au moins une membrane semi-perméable (4) et en ce que la chambre de chargement (5) pour la substance comestible soluble dans l'eau (6) est disposée dans la partie supérieure (2) de la poche en feuille (1).

6. Dispositif suivant la revendication 1, caractérisé en ce que la poche en feuille (1) est disposée à l'état replié dans une enveloppe (11) fermée pouvant être déchirée.

7. Dispositif suivant la revendication 1, caractérisé en ce que la partie inférieure (3) de la poche en feuille (1) présentant au moins une membrane semi-perméable (4) comporte, à au moins un endroit, une jonction (10) entre les parois avoisinantes, de préférence une soudure ou un collage.

8. Dispositif suivant revendication 1, caractérisé en ce que la poche en feuille (1) comporte une ouverture d'extraction (8) pouvant être refermée et qui est adaptée pour servir d'embouchure.

9. Dispositif suivant revendication 1, caractérisé en ce qu'une couche filtrante supplémentaire est appliquée sur le côté extérieur de la membrane semi-perméable (4).

10. Dispositif suivant revendication 9, caractérisé en ce que la couche filtrante supplémentaire recouvre également les coutures soudées ou collées avec la feuille adjacente en dépassant la membrane semi-perméable (4).

11. Dispositif suivant revendication 1, caractérisé en ce qu'au moins la partie inférieure de la poche en feuille (1) est entourée de manière serrée d'une poche (16) supplémentaire perméable, de préférence en un tissé en fibres synthétiques.

12. Dispositif suivant revendication 1, caractérisé en ce que la poche en feuille (1) présente au moins un dispositif de suspension (7) en forme d'œillet.

13. Dispositif suivant revendication 1, caractérisé en ce que la poche en feuille (1) présente au moins une marquation (13) de la quantité admissible.

14. Dispositif suivant revendication 1, caractérisé en ce que la substance comestible soluble dans l'eau contient du fructose.

15. Dispositif suivant revendication 1, caractérisé en ce que la substance comestible soluble dans l'eau contient des acides de fruit.

16. Dispositif suivant revendication 1, caractérisé en ce que la substance comestible soluble dans l'eau est enrichie avec des vitamines et/ou d'autres substances actives pharmaceutiques.

# Fig. 1

# Fig. 2

# Fig. 3